# EUROPÄISCHE PATENTSCHRIFT

(11) **EP 1 066 464 B1**
(45) Veröffentlichungstag und Bekanntmachung des Hinweises auf die Patenterteilung: **29.10.2003**
(21) Anmeldenummer: 99964378.6
(22) Anmeldetag: 25.11.1999
(51) Int. Cl.: F02M 37/10, F02M 37/22, F02M 37/18

(54) **FÖRDEREINRICHTUNG FÜR KRAFTSTOFF**
FUEL SUPPLY DEVICE
DISPOSITIF DE CIRCULATION DE CARBURANT

(30) Priorität: 21.01.1999 DE 19902239; 25.09.1999 DE 19946024
(43) Veröffentlichungstag der Anmeldung: 10.01.2001
(73) Patentinhaber: ROBERT BOSCH GMBH, 70442 Stuttgart (DE)
(72) Erfinder: STROHL, Willi, D-71717 Beilstein (DE); SCHMIEDER, Dietmar, D-71706 Markgroeningen (DE)
(86) Internationale Anmeldenummer: DE9903735
(87) Internationale Veröffentlichungsnummer: WO00043664

(56) Entgegenhaltungen:
- EP-A- 0 629 522
- DE-A- 4 425 670
- DE-A- 4 444 854
- DE-A- 19 501 353
- DE-A- 19 509 143

## Beschreibung

### Stand der Technik

Die Erfindung betrifft eine Fördereinrichtung für Kraftstoff nach dem Oberbegriff des Hauptanspruchs.

Es sind bereits Fördereinrichtungen für Kraftstoff der gattungsgemäßen Art bekannt, bei denen der Kraftstoff aus einem Kraftstofftank beispielsweise zu einem Einspritzsystem des Verbrennungsmotors eines Kraftfahrzeugs gefördert wird.

Eine solche Fördereinrichtung ist aus der DE 44 44 854 A1 bekannt, bei der die Förderpumpe von einem Elektromotor angetrieben wird und der Kraftstoff vor der Förderpumpe durch einen Vorfilter strömt und nach der Förderpumpe unter dem Förderdruck durch einen Hauptfilter geführt wird. Diese Bauteile sind in einem Filtertopf mit abnehmbaren Deckel angeordnet, wobei der Elektromotor und die Förderpumpe in einer Zentralkammer und der Hauptfilter in einer konzentrisch um diese angeordneten Ringkammer liegen.

Beim Aufbau der Förderpumpe im Filtertopf ist hierbei auf eine möglichst große Dichtheit zwischen den bewegten Pumpenteilen und den Filtertopfgehäuseteilen zu achten. Außerdem ist bei der bekannten Anordnung zunächst eine relativ große Erstbefüllmenge von der Kraftstoffpumpe zu fördern bis ein Rückschlagventil den Weg für den Kraftstoff zum Hauptfilter freigibt.

### Vorteile der Erfindung

Die eingangs beschriebene Fördereinrichtung für Kraftstoff ist mit den erfindungsgemäßen Merkmalen des Kennzeichens des Hauptanspruchs dadurch vorteilhaft, dass zusätzlich eine Seitenkanalpumpe als Vorstufe an der Förderpumpe angeordnet ist, in der Kraftstoff über ein vorzugsweise seitlich neben dem Topfgehäuse liegendes Steigrohr in das Topfgehäuse zum Ansaugbereich einer Hauptstufe gefördert wird.

In vorteilhafter Weise wird bei der erfindungsgemäßen Anordnung nur eine relativ kleine Erstbefüllmenge im Kraftstofftank benötigt, da die Ansaugung des Kraftstoffes über die Vorstufe erfolgt, deren Ansaugstutzen nahe am Tankboden liegen kann. Der Kraftstoff gelangt nach der Vorstufe durch das Steigrohr direkt in das Topfgehäuse, wodurch auch eine sonst notwendige Rückschlagklappe oder das Startventil entfallen kann. Ein Leerlaufen des Topfgehäuses ist auch beim Beenden der Kraftstoffförderung weitgehend verhindert, da ein Leerlaufen hier nur über die Dichtstelle zwischen der Vorstufe und der Hauptstufe möglich ist, was durch eine optimale Abdichtung verhindert werden kann. Auch eine gute Restabsaugung des Topfgehäuses ist mit der Erfindung durchführbar.

Durch eine geeignete Bemessung der Seitenkanalpumpe, insbesondere durch einen entsprechenden Durchmesser des Laufrades der Förderpumpe, kann die Förderleistung dieser Vorstufe in der Förderpumpe so gewählt werden, dass das Steigrohr direkt von der Seitenkanalpumpe befüllt wird.

Besonders vorteilhaft ist es jedoch, wenn zwischen dem Ausgang der Seitenkanalpumpe und dem Steigrohr eine Strahldüse angeordnet ist, die zu einer Erhöhung der Füllgeschwindigkeit des Topfgehäuses führt, wenn die Fördergeschwindigkeit der Seitenkanalpumpe zu gering sein sollte. Der Druck in der Strahldüse kann dabei auf einfache Weise durch die Seitenkanalpumpe erzeugt werden, wobei der hier notwendige Druck mit der als Vorstufe wirkenden Seitenkanalpumpe mit einer großen Genauigkeit aufgebaut werden kann, was zu einer Verbesserung der Topffüllgeschwindigkeit führt.

Um Kraftstoffverluste im Topfgehäuse bei einem Stillstand des mit dem Kraftstoff angetriebenen Fahrzeugs zu vermeiden, ist es vorteilhaft wenn die Seitenkanalpumpe im Laufrad der Förderpumpe derart integriert ist und wenn das Laufrad der Förderpumpe weitestgehend plan auf einer entsprechenden angrenzenden Fläche eines Ansaugdeckels der Förderpumpe aufliegt. Hierdurch ist nicht nur eine optimale Abdichtung der Hauptstufe erreicht, sondern auch die Abdichtung von der Hauptstufe zur Vorstufe in vorteilhafter Weise gewährleistet. Zur Vermeidung von eventuell auftretenden Axialkräften können auch im Bereich der Auflageflächen des Laufrades Drucktaschen angebracht sein, die einen axialen Kräfteausgleich durch Druckunterschiede am Laufrad ermöglichen, wodurch weniger Reibkräfte auftreten und dadurch ein besserer Wirkungsgrad erreicht ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel der erfindungsgemäßen Fördereinrichtung für Kraftstoff wird anhand der Zeichnung erläutert. Es zeigen:
Figur 1 ein Kraftstofffördermodul mit einer Förderpumpe nach dem Stand der Technik und
Figur 2 ein erfindungsgemäßes Ausführungsbeispiel einer Förderpumpe mit einer Seitenkanalpumpe.

### Beschreibung des Ausführungsbeispiels

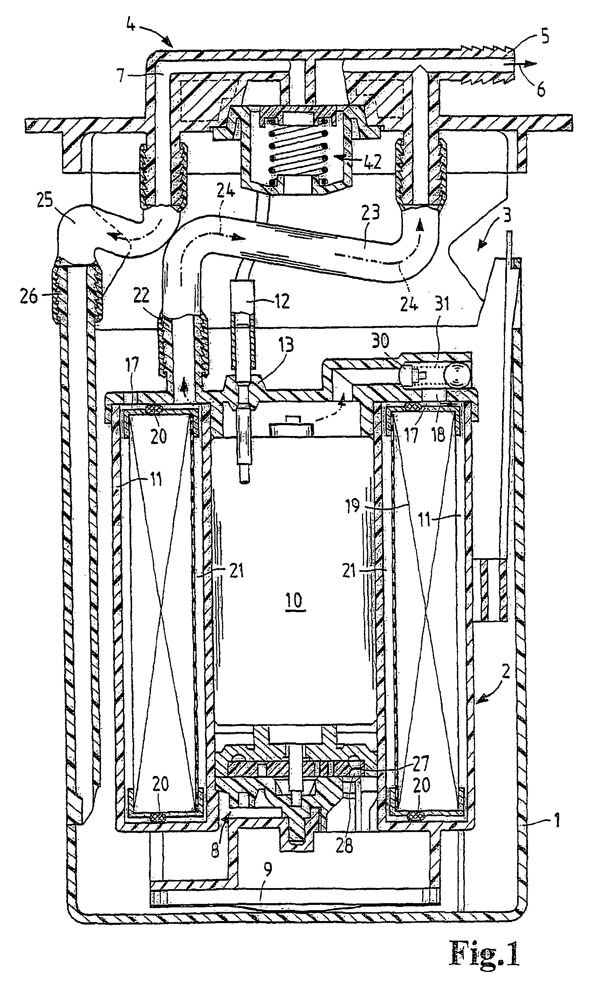

In Figur 1 ist ein aus dem Stand der Technik bekanntes Kraftstofffördermodul gezeigt, wobei ein Längsschnitt eines Kraftstofftanks 1 mit einer Fördereinrichtung 2 dargestellt ist, die von oben durch eine Öffnung 3 des Kraftstofftanks 1 in diesen eingesetzt werden kann. Die Öffnung 3 ist mit einem Tankflansch 4 verschließbar. Am Tankflansch 4 befindet sich ein Anschlussstutzen 5 für eine hier nicht dargestellte Förderleitung, die zum Verbrennungsmotor eines Kraftfahrzeuges führt und den Kraftstoff gemäß der Pfeile 6 transportiert. Weiterhin ist im Tankflansch 4 ein Anschluss für eine vom Verbrennungsmotor kommende Kraftstoff-Rückleitung 7 und ein Druckregler 42 vorhanden, deren Funktionsweise für das Verständnis der Erfindung nicht näher erläutert werden braucht.

Die Fördereinrichtung 2 enthält im unteren Bereich eine Förderpumpe 8, die Kraftstoff aus dem Bodenbereich des Kraftstofftanks 1 über ein Vorfilter 9 ansaugt. Die Förderpumpe wird von einem Elektromotor 10 angetrieben, der oberhalb der Förderpumpe 8 zentral in einem Filtertopf 11 als Gehäuse liegt. Der Elektromotor 10 wird über Verbindungsleitungen 12 in einem Deckel 13 mit der notwendigen elektrischen Energie versorgt. In der Figur 1 ist die aus dem Stand der Technik bekannte Förderpumpe mit einem Pumpen-Laufrad 27 versehen, wobei der Kraftstoff in der Hauptstufe in einem Pumpenraum 28 transportiert wird.

Oberhalb des Elektromotors 10 gelangt der in dieser Hauptstufe der Förderpumpe 8 geförderte Kraftstoff zu einem Rückschlagventil 30, das gegen den Druck einer Feder 31 bei einer ausreichenden Füllung mit Kraftstoff nachgibt und den Kraftstoff in eine äußere Kammer 17 gemäß Pfeil 18 an die Anströmseite eines Hauptfilterelementes 19 im Filtertopf 11 fließen lässt. Das Hauptfilterelement 19, bzw. der Filtertopf 11 ist über Ringdichtungen 20 in die äußere, anströmseitige Kammer 17 und in eine innere Kammer 21 aufteilt. Aus der inneren Kammer 21 fließt der durch das durchströmte Hauptfilterelement 19 gefilterte Kraftstoff zu einem Anschlussstutzen 22.

Am Anschlussstutzen 22 ist eine Rohrverbindung 23 angeschlossen, die eine Verbindung zum Tankflansch 4 herstellt, so dass der Kraftstoff gemäß der Pfeile 24 und 6 von der inneren Kammer 21 im Filtertopf 11 zu der äußeren Förderleitung fließen kann. Auch die Kraftstoff-Rückleitung 7 ist hier über eine Rohrverbindung 25 an einen Anschlussstutzen 26 des Kraftstofftanks 1 angeschlossen.

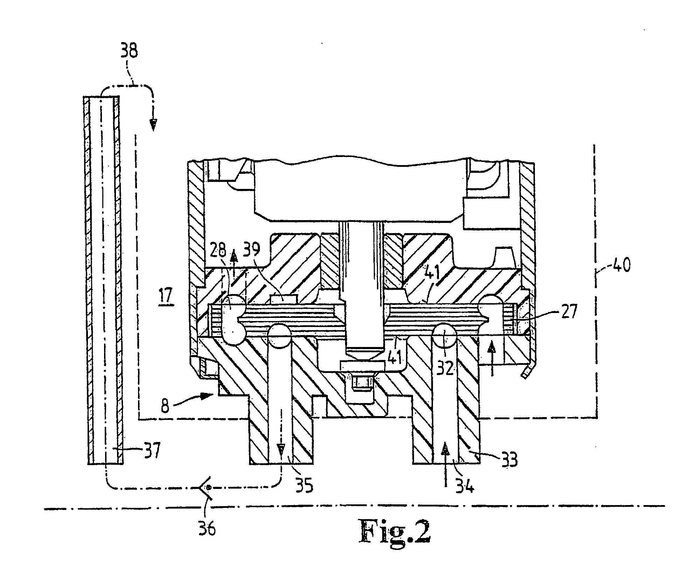

Aus Figur 2 ist eine erfindungsgemäße Weiterbildung der Förderpumpe 8 zu entnehmen, die gegenüber der in der Figur 1 dargestellten bekannten Förderpumpe 8 mit einer Vorstufe 32 zur Bildung einer Seitenkanalpumpe erweitert ist. Im Pumpen-Laufrad 27 ist dabei die Hauptstufe 28 in gleicher Weise wie beim Stand der Technik realisiert. In einem Ansaugdeckel 33 der Förderpumpe 8 ist hier jedoch ein Einlass 34 für den Kraftstoff vorhanden, der vom Tankboden mit der Vorstufe 32 angesaugt wird; dieser Kraftstoff wird mit dem Pumpen-Laufrad 27 im Pumpenraum der Vorstufe 32 unter Erhöhung des Flüssigkeitsdrucks zu einem Auslass 35 transportiert.

Die Vorstufe 32 ist als einseitig geöffnete Seitenkanalpumpe im Laufrad 27 ausgebildet. Die Ausbildung der Vorstufe 32 ist im Laufrad 27 auf der dem Einlass 34, d.h. auf der dem Tankboden zugewandten Seite hin geöffnet. Dadurch wird bei Stillstand der Fördereinrichtung das Laufrad 27 aufgrund des statischen Drucks auf den Ansaugdekkel 33 der Förderpumpe 8 gedrückt. Somit ist die Hauptstufe 28 zur Vorstufe 32 hin abgedichtet. Es kann kein Kraftstoff mehr aus dem Topf 40 über die Vorstufe 32 in den Tankboden zurückfließen. Der Axialspalt zwischen der Vorstufe 32 und der Hauptstufe 28 ist durch die Gewichtskraft des Laufrades 27 und dem statischen Druck abgedichtet. Hierzu müssen die beiden Flächen dichtend aufeinander zur Auflage kommen können.

Der sich in einem Segment kreisförmig im Laufrad 27 erstreckende Pumpenraum der Vorstufe 32 wird hier vorzugsweise so gelegt, dass er dem Pumpenraum der Hauptstufe 28 so benachbart ist, dass sich die Ansaugbereiche bzw. die Bereiche niederen Drucks der Hauptstufe 28 und der Vorstufe 32 gegenüber liegen. Somit können Leckverluste zwischen diesen Pumpenräumen weitgehend verhindert werden, da sich der relativ kürzere Pumpenraum der Vorstufe 32 dann nicht in die Bereiche mit dem relativ hohen Druck der Hauptstufe 28 erstreckt.

Vom Auslass 35 wird dieser Kraftstoff mittels einer Strahldüse 36 zu einem Seitenrohr 37 und durch dieses Seitenrohr 37 gemäß Pfeil 38 in ein Topfgehäuse 40 geleitet. Durch eine geeignete Dimensionierung des Pumpenraumes in der Vorstufe 32 und des Durchmessers des Pumpen-Laufrades 27 kann die Förderleistung dieser Vorstufe so gewählt werden, dass das Topfgehäuse 40 in einer hier nicht gezeigten Ausführungsform, auch direkt, ohne die Strahldüse 36 befüllt wird.

Die Auflageflächen 41 des Pumpen-Laufrades 27 am Gehäuse der Förderpumpe 8 und insbesondere am Ansaugdeckel 33 sind weitgehend plan gestaltet, somit kann hierbei sichergestellt werden, dass möglichst geringe Kraftstoffverluste in der Förderpumpe 8 zu erwarten sind. Um eventuell zu große auftretende Axialkräfte am Pumpen-Laufrad 27 zu vermeiden, können darüber hinaus auch noch Drucktaschen 39 zwischen dem Laufrad 27 und dem Gehäuse der Förderpumpe 8 angebracht werden. Diese Axialkräfte entstehen durch den höheren Druck des Kraftstoffs auf der oberen Seite des Laufrades 27 gegenüber dem Druck auf der Seite, die am Ansaugdeckel 33 anliegt.

## Patentansprüche

1. Fördereinrichtung für Kraftstoff, mit
einer von einem Elektromotor (10) angetriebenen Förderpumpe (8),
einem Gehäuse (11) zur Aufnahme des Elektromotors (10), der Förderpumpe (8) und einer Filtereinrichtung (9,19), die im Kraftstoffstrom der Förderpumpe (8) vor- und/oder nachgeschaltet ist, wobei die Förderpumpe (8) den Hauptstrom des Kraftstoffes durch eine zentrale Ausnehmung im Filtertopf an die Anströmseite eines Hauptfilters (19) der Filtereinrichtung (9,19) transportiert, und wobei eine Seitenkanalpumpe als Vorstufe (32) an der Förderpumpe (8) angeordnet ist, **dadurch gekennzeichnet, dass**
die Vorstufe (32) Kraftstoff nach einem Vorfilter (9) der Filtereinrichtung über ein Steigrohr (37) und über eine Topfgehäuse (40) zum Ansaugbereiche einer Hauptstufe (28) fördert, und dass
die Vorstufe (32) als einseitig geöffnete Seitenkanalpumpe im Laufrad (27) der Förderpumpe (8) auf der dem Tankboden (43) zugewandten Seite ausgebildet ist.

2. Fördereinrichtung nach Anspruch 1, **dadurch gekennzeichnet, dass**
die dem Laufrad (27) zugewandte Fläche des Ansaugdeckels (33) und die dem Ansaugdeckel (33) zugewandte Fläche des Laufrades (27), insbesondere im Bereich zwischen der Vorstufe (32) und der Hauptstufe (28), dichtend aufeinander aufliegen können.

3. Fördereinrichtung nach Anspruch 1 oder 2, **dadurch gekennzeichnet, dass**
die Seitenkanalpumpe im Pumpen-Laufrad (27) der Förderpumpe (8) integriert ist und dass das Pumpen-Laufrad (27) im wesentlichen plan auf einer entsprechenden Fläche eines Ansaugdeckels (33) des Gehäuses der Förderpumpe (8) aufliegt.

4. Fördereinrichtung nach einem der vorhergehenden Ansprüche, **dadurch gekennzeichnet, dass**
im Bereich der Auflageflächen des Pumpen-Laufrades (27) Drucktaschen (39) angebracht sind.

5. Fördereinrichtung nach einem der vorhergehenden Ansprüche, **dadurch gekennzeichnet, dass**
der Pumpenraum der Vorstufe (32) dem Pumpenraum der Hauptstufe (28) so benachbart angeordnet ist, dass sich deren Ansaugbereiche gegenüber liegen.

6. Fördereinrichtung nach einem der vorhergehenden Ansprüche, **dadurch gekennzeichnet, dass**
zwischen dem Ausgang der Seitenkanalpumpe und dem Steigrohr (37) eine Strahldüse (36) angeordnet ist, wobei der Druck in der Strahldüse (36) durch die Seitenkanalpumpe aufbaubar ist.

## Claims

1. Feed device for fuel, having a feed pump (8) which is driven by an electric motor (10), a housing (11) for accommodating the electric motor (10), the feed pump (8) and a filter device (9, 19) which is connected in the fuel flow upstream and/or downstream of the feed pump (8), the feed pump (8) transporting the main flow of fuel through a central recess in the filter cup to the inflow side of a main filter (19) of the filter device (9, 19), and a side channel pump being arranged as a primary stage (32) on the feed pump (8), **characterized in that** the primary stage (32) feeds fuel downstream of a primary filter (9) of the filter device via a rising pipe (37) and via a cup housing (40) to the intake regions of a main stage (28), and **in that** the primary stage (32) is designed as a side channel pump, which is open on one side, in the impeller (27) of the feed pump (8) on the side facing the tank bottom (43).

2. Feed device according to Claim 1, **characterized in that** that surface of the intake cover (33) which faces the impeller (27) and that surface of the impeller (27) which faces the intake cover (33) can rest in a sealing manner on each other particularly in the region between the primary stage (32) and the main stage (28).

3. Feed device according to Claim 1 or 2, **characterized in that** the side channel pump is integrated in the pump impeller (27) of the feed pump (8), and **in that** the pump impeller (27) rests in an essentially planar manner on a corresponding surface of an intake cover (33) of the housing of the feed pump (8).

4. Feed device according to one of the preceding claims, **characterized in that** pressure pockets (39) are fitted in the region of the supporting surfaces of the pump impeller (27).

5. Feed device according to one of the preceding claims, **characterized in that** the pump chamber of the primary stage (32) is arranged adjacent to the pump chamber of the main stage (28) in such a manner that their intake regions lie opposite each other.

6. Feed device according to one of the preceding claims, **characterized in that** a jet nozzle (36) is arranged between the outlet of the side channel pump and the rising pipe (37), it being possible for the pressure in the jet nozzle (36) to be built up by the side channel pump.

## Revendications

1. Installation d'alimentation de carburant dotée d'une pompe d'alimentation (8) entraînée par un électromoteur (10), d'un carter (11) pour loger l'électromoteur (10), la pompe d'alimentation (8) et un dispositif de filtrage (9, 19) qui précède ou est intercalé à la suite de la pompe d'alimentation (8) dans le flux de carburant, la pompe d'alimentation (8) transportant le flux principal du carburant à travers une cavité centrale dans le bac filtrant en aval d'un filtre principal (19) du dispositif de filtrage (9, 19), avec une pompe à canal latéral montée sur la pompe d'alimentation (8) comme pré-étage (32),
**caractérisée en ce que**
le pré-étage (32) transporte du carburant après un pré-filtre (9) du dispositif de filtrage vers les zones d'aspiration d'un étage principal (28) par un tube montant (37) et un bac de stockage (40) et le pré-étage (32) est à la forme d'une pompe à canal latéral ouverte d'un côté dans le rotor (27) de la pompe d'alimentation (8) sur le côté tourné vers le fond du réservoir (43).

2. Installation d'alimentation selon la revendication 1,
**caractérisée en ce que**
la surface du couvercle d'aspiration (33) tournée vers le rotor (27) et la surface du rotor (27) tournée vers le couvercle d'aspiration (33), notamment dans la zone comprise entre le pré-étage (32) et l'étage principal (28), peuvent être disposées hermétiquement l'une sur l'autre.

3. Installation d'alimentation selon la revendication 1 ou 2,
**caractérisée en ce que**
la pompe à canal latéral est intégrée dans le rotor (27) de la pompe d'alimentation (8) et le rotor (27) de la pompe repose essentiellement à plat sur une surface correspondante d'un couvercle d'aspiration (33) du boîtier de la pompe d'alimentation (8).

4. Installation d'alimentation selon l'une des revendications précédentes,
**caractérisée en ce que**
des poches de pression (39) sont appliquées dans la zone des surfaces d'appui du rotor (27) de la pompe.

5. Installation d'alimentation selon l'une des revendications pré cédentes,
**caractérisée en ce que**
la chambre de pompe du pré-étage (32) est disposée si près de la chambre de pompe de l'étage principal (28) que leurs zones d'aspiration se chevauchent.

6. Installation d'alimentation selon l'une des revendications pré cédentes,
**caractérisée en ce qu'**
un injecteur (36) est monté entre la sortie de la pompe à canal latéral et le tube montant (37), la pression dans l'injecteur (36) étant établie par la pompe à canal latéral.
